# EUROPEAN PATENT APPLICATION

(11) **EP 1 670 103 A1**
(43) Date of publication of application: **14.06.2006**
(21) Application number: 04772034.7
(22) Date of filing: 23.08.2004
(51) Int. Cl.: H01S 3/042

(54) **SOLID STATE LASER**

(30) Priority: 25.09.2003 JP 2003333827
(71) Applicant: HAMAMATSU PHOTONICS K.K., Hamamatsu-shi, Shizuoka-ken 435-8558 (JP); Nakai, Sadao, Ibaraki-shi, Osaka 567-0048 (JP)
(72) Inventor: NAKAI, Sadao, Ibaraki-shi, Osaka 5670048 (JP); KAWASHIMA, Toshiyuki, Hamamatsu-shi, Shizuoka 4358558 (JP); KANABE, Tadashi, Takarazuka-shi, Hyogo 6650871 (JP); KAN, Hirofumi, Hamamatsu-shi, Shizuoka 4358558 (JP)
(74) Representative: Grünecker, Kinkeldey, Stockmair & Schwanhäusser Anwaltssozietät
(86) International application number: PCT/JP2004/012073
(87) International publication number: WO 2005/031928

(57) **Abstract**

A solid-state laser apparatus which can cool a solid-state laser medium such that the solid-state laser medium attains a uniform temperature along the propagating direction of light to be amplified is provided.

In a solid-state laser apparatus 1, a coolant circulating through flow paths 12a, 12b comes into direct contact with a pair of reflecting end faces 5a, 5b of a solid-state laser medium 3, whereby the laser medium 3 heated by pumping light emitted from semiconductor lasers 9 can efficiently be cooled. Since the coolant circulates through the flow paths 12a, 12b in a direction substantially perpendicular to a propagating surface P of light to be amplified L, the solid-state laser medium 3 can be cooled such as to attain a uniform temperature along a propagating direction of the light L. This can lower the thermal lens effect and thermal birefringence effect in the solid-state laser medium 3.

## Description

### Technical Field

The present invention relates to a solid-state laser apparatus which amplifies light to be amplified by propagating it in a zigzag fashion in a slab-shaped solid-state laser medium.

### Background Art

An example of conventional solid-state laser apparatus of this kind is one disclosed in Non-patent Document 1. By circulating a coolant along a propagating direction of light to be amplified so as to bring the coolant into contact with a pair of reflecting end faces reflecting the light in a laser medium, this solid-state laser apparatus prevents the laser medium from raising its temperature and reducing the thermal lens effect and thermal birefringence effect.
Non-patent Document 1: "Amplification Analysis of High-Output LD-Pumped Zigzag-Slab Nd Glass Laser", Digest of Technical Papers, the 23rd Annual Meeting of the Laser Society of Japan, p. 51

### Disclosure of the Invention

### Problem to be Solved by the Invention

However, the following problem exists in the above-mentioned solid-state laser apparatus. Namely, since the coolant takes heat away from the laser medium, the temperature of the coolant becomes higher on the farther downstream side, thereby generating a temperature gradient in the laser medium along the propagating direction of the light to be amplified. This keeps the thermal lens effect and thermal birefringence effect from lowering, which may cause a fear of the laser output and laser quality from decreasing.

In view of such circumstances, it is an object of the present invention to provide a solid-state laser apparatus which can cool a solid-state laser medium such that the solid-state laser medium attains a uniform temperature along the propagating direction of light to be amplified.

### Means for Solving Problem

For achieving the above-mentioned object, the solid-state laser apparatus in accordance with the present invention is a solid-state laser apparatus for amplifying light to be amplified by propagating the light in a zigzag fashion in a slab-shaped solid-state laser medium, the apparatus comprising a flow path adapted to circulate a coolant in a direction substantially perpendicular to a propagating surface for the light and bring the coolant in contact with a pair of reflecting end faces for reflecting the light in the solid-state laser medium.

In this solid-state laser apparatus, a coolant brought into contact with a pair of reflecting end faces for reflecting light to be amplified is circulated in a direction substantially perpendicular to a propagating surface for the light. Therefore, the solid-state laser medium can be cooled such as to attain a uniform temperature along a propagating direction of the light to be amplified. This can lower the thermal lens effect and thermal birefringence effect in the solid-state laser medium. Here, the propagating surface refers to a surface including a propagating path in which the light to be amplified is propagated in a zigzag fashion in the solid-state laser medium. The propagating direction refers to a direction substantially parallel to a line of intersection between the propagating surface and a reflecting end face.

Preferably, between an inlet of the flow path and the solid-state laser medium, a flow-shaping member having a cross-sectional form widening from the inlet side toward each of the reflecting end faces is arranged. This can smoothly circulate the coolant from the inlet side toward each reflecting end face.

Preferably, a turbulence generating member adapted to turn a coolant flow into a turbulent flow is arranged between the inlet of the flow path and the solid-state laser medium. This brings the coolant into contact with each reflecting end face in a turbulent state, so that heat can be taken away from the solid-state laser medium more efficiently than in the case of a laminar flow, thus making it possible to improve the cooling efficiency of the solid-state laser medium.

Preferably, optical members adapted to absorb spontaneously emitted light generated in the solid-state laser medium are arranged on a pair of parallel end faces substantially parallel to the propagating surface in the solid-state laser medium. In this case, the spontaneously emitted light generated in the solid-state laser medium upon irradiation with pumping light is absorbed by the optical members arranged on the parallel end faces, whereby the spontaneously emitted light can be prevented from being amplified unnecessarily.

Preferably, heat-insulating members are arranged on a pair of parallel end faces substantially parallel to the propagating surface in the solid-state laser medium. This prevents the heat generated in the solid-state laser medium from being released from the parallel end faces, whereby the solid-state laser medium can attain a uniform temperature along a direction perpendicular to the propagating surface of the light to be amplified as well.

Preferably, on a pair of parallel end faces substantially parallel to the propagating surface in the solid-state laser medium, heat-insulating members are arranged by way of optical members adapted to absorb spontaneously emitted light generated in the solid-state laser medium. Employing such a structure can prevent the spontaneously emitted light generated in the solid-state laser medium from being unnecessarily amplified, and can homogenize the temperature of the solid-state laser medium along a direction perpendicular to the propagating surface of the light to be amplified as well.

Preferably, in an entrance/exit part at each end of the solid-state laser medium where the light to be amplified enters or exits, a corner part is chamfered into a curved surface, whereas an O-ring is fitted to the entrance/exit part between a holding part forming at least a part of a side wall of the flow path while holding the entrance/exit part and the entrance/exit part. When a corner part extending in the propagating direction is chamfered into a curved surface in an entrance/exit part at each end of the solid-state laser medium, the O-ring fitted to the entrance/exit part between the holding part and entrance/exit part reliably comes into close contact with a side face of the entrance/exit part. This can reliably keep the watertightness between the holding member and the solid-state laser medium.

### Effect of the Invention

The present invention can cool a solid-state laser medium such that the solid-state laser medium attains a uniform temperature along a propagating direction of light to be amplified.

### Brief Description of the Drawings

[Fig. 1]Fig. 1 is a sectional view of an embodiment of the solid-state laser apparatus in accordance with the present invention;
[Fig. 2]Fig. 2 is a partly enlarged sectional view of the solid-state laser apparatus in accordance with the present invention taken along the line II-II of Fig. 1; and
[Fig. 3]Fig. 3 is a perspective view of the solid-state laser medium in the solid-state laser apparatus of Fig. 1.

### Explanations of Numerals and Letters

1 ... solid-state laser apparatus; 3a...entrance part (entrance/exit part); 3b...exit part (entrance/exit part); 3...solid-state laser medium; 5a, 5b...reflecting end face; 6a, 6b...parallel end face; 12, 12a, 12b...flow path; 13 ... inlet; 18 ... optical member; 19... heat-insulating member; 21...flow-shaping member; 23...metal mesh member (turbulence generating member); 24...holding member; 26... O-ring; L...light to be amplified; P...propagating surface.

### Best Modes for Carrying Out the Invention

In the following, preferred embodiments of the solid-state laser apparatus in accordance with the present invention will be explained in detail with reference to the drawings.

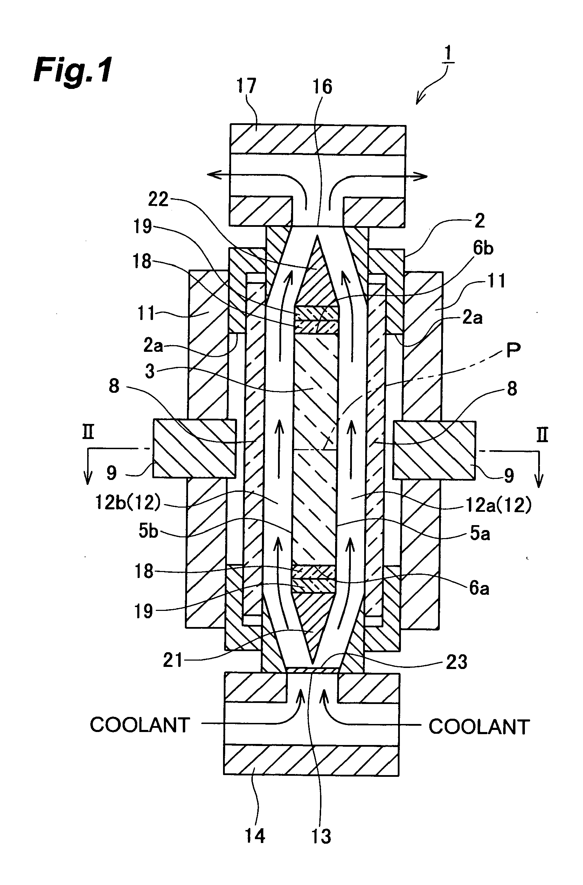

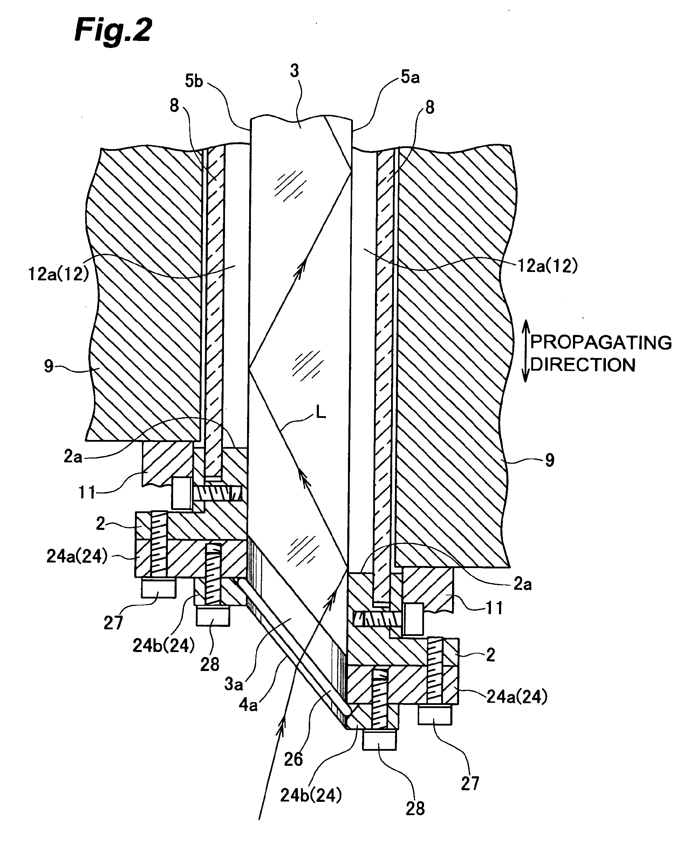

As shown in Figs. 1 and 2, a solid-state laser apparatus 1 is an apparatus which amplifies light to be amplified L by propagating it in a zigzag fashion in a slab-shaped solid-state laser medium 3 arranged in a housing 2, and has a structure for cooling the solid-state laser medium 3 with a coolant. The laser medium 3 is one in which phosphate-based glass for laser as a matrix is doped with neodymium (Nd) as a laser active species, but is not limited thereto. As the matrix, silica-based glass for laser or crystal materials such as YAG, YLF, YVO₄, S-FAP, sapphire, alexandrite, forsterite, and garnet may also be used. As the laser active species, rare earth metals such as Yb, Er, Ho, and Tm or transition metals such as Cr and Ti may also be used.

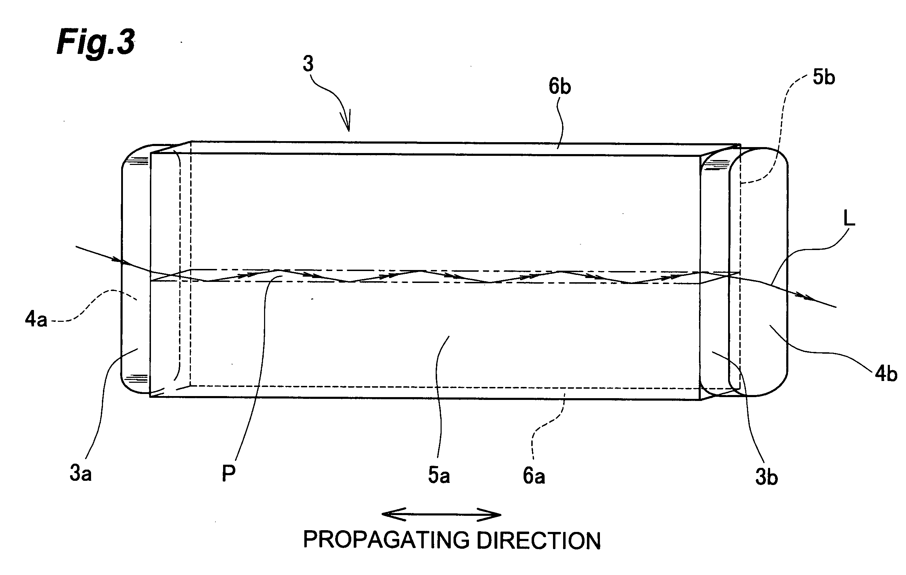

As shown in Fig. 3, the laser medium 3 is formed like an oblong plate, whose end faces opposing each other along its longitudinal direction are an entrance end face 4a and an exit end face 4b for light to be amplified L, whereas end faces opposing each other in its thickness direction are reflecting end faces 5a, 5b of the light to be amplified L. The entrance end face 4a and exit end face 4b are formed oblique (with an angle of 40°, for example) with respect to the longitudinal direction of the laser medium 3, and are parallel to each other. In the following explanation, a surface including a propagating path in which the light to be amplified L is propagated in a zigzag fashion within the laser medium 3 will be referred to as propagating surface P, whereas end faces substantially parallel to the propagating surface P in the laser medium will be referred to as parallel end faces 6a, 6b. A direction substantially parallel to a line of intersection between the propagating surface P and the reflecting end face 3c (i.e., the longitudinal direction of the laser medium 3) will be referred to as propagating direction.

Returning to Figs. 1 and 2, the laser medium 3 penetrates through the housing 2 such that the entrance end face 4a and exit end face 4b are exposed to the outside, whereas rectangular openings 2a having respective window members watertightly attached thereto are formed at respective positions opposing the reflecting end faces 5a, 5b of the laser medium 3 in the housing 2. At respective positions opposing the reflecting end faces 5a, 5b on the outside of the housing 2, semiconductor lasers 9 for irradiating the laser medium 3 with pumping light are arranged so as to extend in the propagating direction, and are held by support members 11 attached to the housing 2.

As a consequence, pumping light emitted from each semiconductor laser 9 is transmitted through its corresponding window member 8, so as to irradiate the laser medium 3, whereby the laser medium 3 attains an excited state. Therefore, the light to be amplified L entering the laser medium 3 from the entrance end face 4a is repeatedly totally reflected by the opposing end faces 5a, 5b while being amplified within the laser medium 3 in the excited state, so as to propagate through the laser medium 3 in a zigzag fashion and exit from the exit end face 4b.

A flow path 12 for circulating a coolant for cooling the solid-state laser medium 3 is formed within the housing 2. An inlet 13 for the flow path 12 is formed at a position opposing the lower parallel end face 6a in the housing 2, whereas an upstream manifold 14 for connecting a flow path (not depicted) of a coolant feeding apparatus for supplying a coolant in a circulating fashion is attached at this position. On the other hand, an outlet 16 of the flow path 12 is formed at a position opposing the upper parallel end face 6b in the housing 2, whereas a downstream manifold 17 for connecting the flow path of the coolant feeding apparatus to the outlet 16 is attached at this position.

Between the inlet 13 and outlet 16, the flow path 12 is split into a flow path 12a formed between one reflecting end face 5a of the laser medium 3 and one window member 8, and a flow path 12b formed between the other reflecting end face 5b and the other window member 8. As a consequence, the coolant flowing into the flow path 12 from within the upstream manifold 14 through the inlet 13 is split into the flow paths 12a and 12b, which are then combined together and flow into the downstream manifold 14 through the outlet 16.

Thus, in the solid-state laser apparatus 1, the coolant circulating through the flow paths 12a, 12b come into direct contact with a pair of reflecting end faces 5a, 5b of the solid-state laser medium 3, and can efficiently cool the laser medium 3 heated by the pumping light emitted from the semiconductor lasers 9. Since the coolant circulates through the flow paths 12a, 12b in a direction substantially perpendicular to the propagating surface P of the light to be amplified L, the solid-state laser medium 3 can be cooled such as to attain a uniform temperature along the propagating direction of the light to be amplified L. This can lower the thermal lens effect and thermal birefringence effect within the solid-state laser medium 3.

As shown in Fig. 1, an optical member 18 made of cladding glass absorbing spontaneously emitted light generated in the laser medium 3 is secured to the lower parallel end face 6a of the laser medium 3 while in a state extending in the propagating direction, whereas a heat-insulating member 19 made of Teflon (registered trademark) substantially free of deterioration caused by light is secured onto the optical member 18 while in a state extending in the propagating direction. Similarly, an optical member 18 is secured to the upper parallel end face 6b of the laser medium 3 while in a state extending in the propagating direction, whereas a heat-insulating member 19 is secured onto the optical member 18 while in a state extending in the propagating direction.

When such a structure is employed, the spontaneously emitted light generated in the laser medium 3 upon irradiation with pumping light by the semiconductor lasers 9 is absorbed by the optical members 18, whereby the spontaneously emitted light can be prevented from being unnecessarily amplified. Further, the heat-insulating members 19 prevent the heat generated in the laser medium 3 from being released from the parallel end faces 6a, 6b, whereby the temperature of the laser medium 3 can be homogenized along a direction perpendicular to the propagating surface P of the light to be amplified L as well.

Between the inlet 13 of the flow path 12 and the laser medium 3, a flow-shaping member 21 having a triangular cross-sectional form widening from the inlet 13 side toward the reflecting end faces 5a, 5b is secured onto the heat-insulating member 19 while in a state extending in the propagating direction. As a consequence, the coolant can smoothly be split from the inlet 13 side toward the reflecting end faces 5a, 5b. Between the outlet 16 of the flow path 12 and the laser medium 3, on the other hand, a flow-shaping member 22 having a triangular cross-sectional form widening from the outlet 16 side toward the reflecting end faces 5a, 5b is secured onto the heat-insulating member 19 while in a state extending in the propagating direction. As a consequence, coolant flows can smoothly be combined together from the reflecting end faces 5a, 5b toward the outlet 16.

Between the inlet 13 of the flow path 12 and the laser medium 3, a metal mesh member (turbulence generating member) 23 for turning a coolant flow into a turbulent flow is attached to the housing 2. As a consequence, the coolant comes into contact with the reflecting end faces 5a, 5b while in a turbulent state, so as to take heat away from the laser medium 3 more efficiently than in the case of a laminar state, whereby the cooling efficiency of the laser medium 3 can be improved. The turbulence generating member is not limited to the metal mesh member 23. For example, the housing 2 may be provided with a plurality of protrusions, the flow-shaping member 21 may have a stepped surface, or the surface of the flow-shaping member 21 may be provided with a plurality of grooves extending in the propagating direction.

Further, as shown in Fig. 3, corner parts to extend in the propagating direction in the entrance part (entrance/exit part) 3a where the light to be amplified L enters and the exit part (entrance/exit part) 3b where the light L exits are chamfered into curved surfaces, thus yielding an oval form (elongated racetrack form). As shown in Fig. 2, the entrance part 3a projects out of the housing 2, whereas a first part 24a and a second part 24b of a holding member 24 which forms a part of the side wall of the flow path 12 while holding the entrance part 3a are successively fitted into thus projected part, and an O-ring 26 is fitted to the entrance part 3a between the holding member 24 and the entrance part 3a so as to be held between the first part 24a and second part 24b. The first part 24a of the holding member 24 is secured to the housing 2 with a bolt 27, whereas the second part 24b is secured to the housing 2 with a bolt 28. The structure concerning the housing 2, holding member 24, and O-ring 26 on the exit part 3b side is the same as that on the entrance part 3 a side and thus will not be explained.

When such a structure is employed, fastening the bolt 28 presses the O-ring 26 against the gap between the holding member 24 and the entrance part 3a. Here, since the corner parts to extend in the propagating direction in the entrance part 3a are chamfered into curved surfaces, the O-ring 26 fitted to the entrance part 3a between the holding part 24 and the entrance part 3a reliably comes into close contact with the side face of the entrance part 3a. The same holds on the exit part 3b side. Therefore, the watertightness between the holding member 24 and the laser medium 3 can reliably be maintained.

The present invention is not limited to the above-mentioned embodiment. For example, though the above-mentioned embodiment relates to a case where the heat-shielding members 19 are arranged on the parallel end faces 6a, 6b by way of the optical members 18, the optical members 18 or heat-insulating members 19 may be arranged alone on the parallel end faces 6a, 6b. In the case where the heat-insulating members 19 are arranged on the parallel end faces 6a, 6b by way of the optical members 18 as in the above-mentioned embodiment, adjusting the thickness of the optical members 18 such as to regulate the amount of absorption of spontaneously emitted light can prevent the heat generated in the laser medium 3 by the heating of the optical members 18 from being released from the parallel end faces 6a, 6b even if the heat slightly escapes through the heat-insulating members 19.

### Industrial Applicability

As explained in the foregoing, the present invention can cool a solid-state laser medium such that the solid-state laser medium attains a uniform temperature along a propagating direction of light to be amplified.

## Claims

1. A solid-state laser apparatus for amplifying light to be amplified by propagating the light in a zigzag fashion in a slab-shaped solid-state laser medium,
the apparatus comprising a flow path adapted to circulate a coolant in a direction substantially perpendicular to a propagating surface for the light and bring the coolant in contact with a pair of reflecting end faces for reflecting the light in the solid-state laser medium.

2. ] A solid-state laser apparatus according to claim 1, wherein, between an inlet of the flow path and the solid-state laser medium, a flow-shaping member having a cross-sectional form widening from the inlet side toward each of the reflecting end faces is arranged.

3. A solid-state laser apparatus according to claim 1 or 2, wherein a turbulence generating member adapted to turn a coolant flow into a turbulent flow is arranged between the inlet of the flow path and the solid-state laser medium.

4. A solid-state laser apparatus according to one of claims 1 to 3, wherein optical members adapted to absorb spontaneously emitted light generated in the solid-state laser medium are arranged on a pair of parallel end faces substantially parallel to the propagating surface in the solid-state laser medium.

5. A solid-state laser apparatus according to one of claims 1 to 3, wherein heat-insulating members are arranged on a pair of parallel end faces substantially parallel to the propagating surface in the solid-state laser medium.

6. A solid-state laser apparatus according to one of claims 1 to 3, wherein, on a pair of parallel end faces substantially parallel to the propagating surface in the solid-state laser medium, heat-insulating members are arranged by way of optical members adapted to absorb spontaneously emitted light generated in the solid-state laser medium.

7. A solid-state laser apparatus according to one of claims 1 to 6, wherein, in an entrance/exit part at each end of the solid-state laser medium where the light to be amplified enters or exits, a corner part is chamfered into a curved surface; and
wherein an O-ring is fitted to the entrance/exit part between a holding part forming at least a part of a side wall of the flow path while holding the entrance/exit part and the entrance/exit part.
